# EUROPEAN PATENT SPECIFICATION

(11) **EP 4 586 230 B1**
(45) Date of publication and mention of the grant of the patent: **11.02.2026**
(21) Application number: 24223582.8
(22) Date of filing: 29.12.2024
(51) Int. Cl.: G06F 21/56, G06F 21/57, G06N 20/00, G09B 7/02, G09B 7/04

(54) **METHOD AND SYSTEM FOR ADAPTIVE REAL TIME TRAINING FOR UNIFORM RESOURCE LOCATOR AWARENESS**
VERFAHREN UND SYSTEM FÜR ADAPTIVES ECHTZEITTRAINING FÜR UNIFORM RESOURCE LOCATOR SENSIBILISIERUNG
PROCÉDÉ ET SYSTÈME D'APPRENTISSAGE ADAPTATIF EN TEMPS RÉEL POUR UNE SENSIBILITÉ UNIFORME AU LOCALISATEUR DE RESSOURCES

(30) Priority: 10.01.2024 IN 202421001996
(43) Date of publication of application: 16.07.2025
(73) Proprietor: Tata Consultancy Services Limited, Mumbai, Maharashtra 400 021 (IN)
(72) Inventor: DHEBE, AJIT GOPICHAND, 411057 Pune, Maharashtra (IN); MULAY, CHINMAY SURESH, 411057 Pune, Maharashtra (IN); JAYAKRISHNAN, GOKUL CHETTOOR, 682042 Kakkanad, Kerala (IN); BANAHATTI, VIJAYANAND MAHADEO, 411057 Pune, Maharashtra (IN); LODHA, SACHIN, 411057 Pune, Maharashtra (IN)
(74) Representative: Goddar, Heinz J.

(56) References cited:
- US-B2- 8 521 667

## Description

### CROSS-REFERENCE TO RELATED APPLICATIONS AND PRIORITY

The present application claims priority to Indian application no. 202421001996, filed on January 10, 2024.

### TECHNICAL FIELD

The disclosure herein generally relates to the field of cyber security and, more particularly, to a method and system for adaptive real time training for Uniform Resource Locator (URL) awareness.

### BACKGROUND

The Internet is filled with phishing Uniform Resource Locators (URLs) that are major cybersecurity threats. Organizations across the world faces major losses due to cyber-attacks. Most cyber-attacks start with a specially created URL. Every time a user clicks on such malicious URLs, the user is at risk of diverting towards fraudulent websites, malware installations or credentials prompt. Internet users often have misconceptions about the structure of URLs. Attackers often take advantage of such vulnerability while crafting a phishing URL.

In the current landscape, phishing attacks are not only limited to email. Contemporary threats manifest through alternative attack routes, including open-source websites, counterfeit apps, and malvertising. The most effective means to counter phishing attacks is by providing user awareness training. Since users play a pivotal role as the frontline defense in the realm of cybersecurity, equipping users with the skills to adeptly recognize fraudulent emails, harmful links, and suspicious websites can help to avoid cyber-attacks.

Conventional phishing URL detection systems are not effective enough to identify all the phishing URLs with cent percentage accuracy. Conventional methods utilize the principle of Layering to defend against such malicious content. If one layer is defeated the next layer should catch the fraudulent URLs. The principle of layering suggests that an aware human is a critical layer of defense against such threats. Even if any system or specific software fails to identify a phishing URL, a human user can still identify it when provided with proper contextual training. Currently, there are ample training methods available to make employees/users in organizations aware of different cybersecurity concepts. However, these training systems require employees to take time out from their working schedule and log into isolated systems to engage with cybersecurity training content. As per the research, if a participant is not able to receive instruction, practice and feedback at the time the behavior (for example clicking or hovering a phishing URL) occurs, then it is unlikely the skill will be applicable to the natural context. The content offered by the existing training platform is generic in nature catering towards the specific group of people rather than individual and the training approaches are static one. Hence there is a challenge in providing dynamic training content without exploiting the working hours of users/employees.

### SUMMARY

Embodiments of the present disclosure present technological improvements as solutions to one or more of the above-mentioned technical problems recognized by the inventors in conventional systems. For example, in one embodiment, a method for adaptive real time training for Uniform Resource Locator (URL) awareness is provided. The method includes receiving, by one or more hardware processors, a browsing behavioral data associated with each of a plurality of potential trainees for a predefined time window, wherein the plurality of potential trainees are identified based on a plurality of training activation prompt in real time, wherein the plurality of training activation prompt comprises at least one of (i) interacting at least one risky Uniform Resource Locator (URL) (ii) when a frequency of interacted URLs associated with each of the plurality of potential trainees is greater than a predefined interaction threshold and (iii) a user initiated training. Further, the method includes analyzing, by the one or more hardware processors, a risk category associated with each URL among a plurality of URLs interacted by each of the plurality of potential trainees, wherein a warning is given to each of the plurality of potential trainees based on the associated risk category. Furthermore, the method includes simultaneously identifying, by the one or more hardware processors, a plurality of trainees from among the plurality of potential trainees based on a training willingness obtained from each of the plurality of potential trainees. Furthermore, the method includes identifying, by the one or more hardware processors, a plurality of URL components associated with each of the plurality of interacted URLs using a pattern matching technique, wherein each of the plurality of URL components associated with each of the plurality of interacted URLs is associated with a weight. Furthermore, the method includes initiating training, by the one or more hardware processors, for each of the plurality of trainees by displaying the plurality of URL component based questionnaire and receiving a corresponding answer from each of the plurality of trainees. Finally, the method includes iteratively performing, by the one or more hardware processors, until a performance score associated with each of the plurality of trainees is greater than a predefined score threshold: (i) obtaining an answering pattern associated with each of the plurality of trainees for a predefined number of attempts based on an associated user strike rate (ii) computing the performance score associated with each of the plurality of trainees based on the corresponding user strike rate associated with each of the plurality of URL components, an overall strike rate of the plurality of URL components and an average time taken to answer the URL component based questionnaire associated with each of the plurality of URL components (iii) updating, by the one or more hardware processors, the weight corresponding to each of the plurality of URL components based on the answering pattern associated with each of the plurality of trainees for the corresponding plurality of URL components based questionnaire, wherein the weight is decremented if the answer is correct and wherein the weight is incremented if the answer is incorrect, wherein a strike rate based weight is added to the weight if the corresponding user strike rate is less than a predefined strike threshold (iv) computing, by the one or more hardware processors, a priority value for each of the plurality of URL components based questionnaire corresponding to each of the plurality of trainees based on a corresponding answering pattern and the updated weight, wherein the priority value is incremented if a URL component based questionnaire is not displayed for a predefined recent number of times, and wherein occurrence of an URL component based questionnaire is stopped for a predefined number of future attempts after the first attempt so that next priority URL components based questionnaire are displayed to the plurality of trainees and (v) dynamically decide display order associated with each of the plurality of URL components based questionnaire corresponding to each of the plurality of trainees based on the corresponding priority value and the corresponding performance score, wherein the associated plurality of URL components based questionnaire with the priority value above a predefined priority threshold are displayed to the associated plurality of trainees if the associated performance score is less than a predefined score threshold.

In another aspect, a system for adaptive real time training for Uniform Resource Locator (URL) awareness is provided. The system includes at least one memory storing programmed instructions, one or more Input /Output (I/O) interfaces, and one or more hardware processors operatively coupled to the at least one memory, wherein the one or more hardware processors are configured by the programmed instructions to receive a browsing behavioral data associated with each of a plurality of potential trainees for a predefined time window, wherein the plurality of potential trainees are identified based on a plurality of training activation prompt in real time, wherein the plurality of training activation prompt comprises at least one of (i) interacting at least one risky Uniform Resource Locator (URL) (ii) when a frequency of interacted URLs associated with each of the plurality of potential trainees is greater than a predefined interaction threshold and (iii) a user initiated training. Further, the one or more hardware processors are configured by the programmed instructions to analyze a risk category associated with each URL among a plurality of URLs interacted by each of the plurality of potential trainees, wherein a warning is given to each of the plurality of potential trainees based on the associated risk category. Furthermore, the one or more hardware processors are configured by the programmed instructions to simultaneously identify a plurality of trainees from among the plurality of potential trainees based on a training willingness obtained from each of the plurality of potential trainees. Furthermore, the one or more hardware processors are configured by the programmed instructions to identify a plurality of URL components associated with each of the plurality of interacted URLs using a pattern matching technique, wherein each of the plurality of URL components associated with each of the plurality of interacted URLs is associated with a weight. Furthermore, the one or more hardware processors are configured by the programmed instructions to initiate training for each of the plurality of trainees by displaying the plurality of URL component based questionnaire and receiving a corresponding answer from each of the plurality of trainees. Finally, the one or more hardware processors are configured by the programmed instructions to iteratively perform until a performance score associated with each of the plurality of trainees is greater than a predefined score threshold: (i) obtaining an answering pattern associated with each of the plurality of trainees for a predefined number of attempts based on an associated user strike rate (ii) computing the performance score associated with each of the plurality of trainees based on the corresponding user strike rate associated with each of the plurality of URL components, an overall strike rate of the plurality of URL components and an average time taken to answer the URL component based questionnaire associated with each of the plurality of URL components (iii) updating, by the one or more hardware processors, the weight corresponding to each of the plurality of URL components based on the answering pattern associated with each of the plurality of trainees for the corresponding plurality of URL components based questionnaire, wherein the weight is decremented if the answer is correct and wherein the weight is incremented if the answer is incorrect, wherein a strike rate based weight is added to the weight if the corresponding user strike rate is less than a predefined strike threshold (iv) computing, by the one or more hardware processors, a priority value for each of the plurality of URL components based questionnaire corresponding to each of the plurality of trainees based on a corresponding answering pattern and the updated weight, wherein the priority value is incremented if a URL component based questionnaire is not displayed for a predefined recent number of times, and wherein occurrence of an URL component based questionnaire is stopped for a predefined number of future attempts after the first attempt so that next priority URL components based questionnaire are displayed to the plurality of trainees and (v) dynamically decide display order associated with each of the plurality of URL components based questionnaire corresponding to each of the plurality of trainees based on the corresponding priority value and the corresponding performance score, wherein the associated plurality of URL components based questionnaire with the priority value above a predefined priority threshold are displayed to the associated plurality of trainees if the associated performance score is less than a predefined score threshold.

**In** yet another aspect, a computer program product including a non-transitory computer-readable medium having embodied therein a computer program for adaptive real time training for Uniform Resource Locator (URL) awareness is provided. The computer readable program, when executed on a computing device, causes the computing device to receive a browsing behavioral data associated with each of a plurality of potential trainees for a predefined time window, wherein the plurality of potential trainees are identified based on a plurality of training activation prompt in real time, wherein the plurality of training activation prompt comprises at least one of (i) interacting at least one risky Uniform Resource Locator (URL) (ii) when a frequency of interacted URLs associated with each of the plurality of potential trainees is greater than a predefined interaction threshold and (iii) a user initiated training. Further, the computer readable program, when executed on a computing device, causes the computing device to analyze a risk category associated with each URL among a plurality of URLs interacted by each of the plurality of potential trainees, wherein a warning is given to each of the plurality of potential trainees based on the associated risk category. Furthermore, the computer readable program, when executed on a computing device, causes the computing device to simultaneously identify a plurality of trainees from among the plurality of potential trainees based on a training willingness obtained from each of the plurality of potential trainees. Furthermore, the computer readable program, when executed on a computing device, causes the computing device to identify a plurality of URL components associated with each of the plurality of interacted URLs using a pattern matching technique, wherein each of the plurality of URL components associated with each of the plurality of interacted URLs is associated with a weight. Furthermore, the computer readable program, when executed on a computing device, causes the computing device to initiate training for each of the plurality of trainees by displaying the plurality of URL component based questionnaire and receiving a corresponding answer from each of the plurality of trainees. Finally, the computer readable program, when executed on a computing device, causes the computing device to iteratively perform until a performance score associated with each of the plurality of trainees is greater than a predefined score threshold: (i) obtaining an answering pattern associated with each of the plurality of trainees for a predefined number of attempts based on an associated user strike rate (ii) computing the performance score associated with each of the plurality of trainees based on the corresponding user strike rate associated with each of the plurality of URL components, an overall strike rate of the plurality of URL components and an average time taken to answer the URL component based questionnaire associated with each of the plurality of URL components (iii) updating, by the one or more hardware processors, the weight corresponding to each of the plurality of URL components based on the answering pattern associated with each of the plurality of trainees for the corresponding plurality of URL components based questionnaire, wherein the weight is decremented if the answer is correct and wherein the weight is incremented if the answer is incorrect, wherein a strike rate based weight is added to the weight if the corresponding user strike rate is less than a predefined strike threshold (iv) computing, by the one or more hardware processors, a priority value for each of the plurality of URL components based questionnaire corresponding to each of the plurality of trainees based on a corresponding answering pattern and the updated weight, wherein the priority value is incremented if a URL component based questionnaire is not displayed for a predefined recent number of times, and wherein occurrence of an URL component based questionnaire is stopped for a predefined number of future attempts after the first attempt so that next priority URL components based questionnaire are displayed to the plurality of trainees and (v) dynamically decide display order associated with each of the plurality of URL components based questionnaire corresponding to each of the plurality of trainees based on the corresponding priority value and the corresponding performance score, wherein the associated plurality of URL components based questionnaire with the priority value above a predefined priority threshold are displayed to the associated plurality of trainees if the associated performance score is less than a predefined score threshold.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system for adaptive real time training for Uniform Resource Locator (URL) awareness, in accordance with some embodiments of the present disclosure.
FIG. 1B illustrates a broad level functional architecture of the system for adaptive real time training for URL awareness, in accordance with some embodiments of the present disclosure.
FIG. 2A, FIG. 2B and FIG. 2C, collectively referred as FIG. 2, illustrates a flow diagram for a processor implemented method for adaptive real time training for URL awareness, in accordance with some embodiments of the present disclosure.
FIG. 3 illustrates an example training cycle for the processor implemented method for adaptive real time training for URL awareness, in accordance with some embodiments of the present disclosure.
FIG. 4 illustrates an example answering pattern for the processor implemented method for adaptive real time training for URL awareness, in accordance with some embodiments of the present disclosure.
FIG. 5 illustrates is a flow diagram illustrating awarding priority value to URL components and dynamic generation of list of questions for training for the processor implemented method for adaptive real time training for URL awareness, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Conventionally, to gain knowledge from existing training methods, employees/users need to visit standalone training platforms and these training platforms function in an artificial setting. The employees may become conscious and feel the burden of performing well in such an environment. Further, these methods require employees to take time out from their daily work and log into an isolated system to engage with security training content. Apart from this, standalone training platforms have a limitation of time considering the time commitment required from the number of employees across an organization. Often, the time limit for such methods is kept very limited, that is up to a few minutes. For some existing cybersecurity training methods users need to spend around 8 to 10 minutes to complete all the tasks in training without restarting it even once. It can be challenging to teach a variety of cybersecurity concepts within a limited time on an isolated platform.

Furthermore, existing training systems and methods have a specifically curated material data set to train employees on cybersecurity considering the average user persona. Popular cybersecurity WBT (web-based training) methods have claimed to use URL in the training from certain dataset, which is standard for all users. In the real-world environment the malicious URL may not appear in general format or context the way course designer has trained employees.

Furthermore, course structure, content, pace and difficulty level of existing cybersecurity training methods are predetermined by the course designer. The time duration for the training is also predetermined. It does not show any adaptive nature considering the performance of individual employees. If a particular employee is not performing satisfactorily in the evaluation of the concept at the end of the training, then other than repeating the course there are not any adaptive actions taken with the individual at the center. Similarly, if a particular user is performing well in the evaluation of certain concepts, then there is no point in training that user on similar concepts with same frequency. Current training methods do not show any adaptive behavior to improve the security knowledge of the user in accordance with the knowledge the user is retaining at the end of the training.

Finally, in conventional methods, once the employee has acquired cybersecurity training from a standalone training platform, it is highly unlikely that the employee would want to revisit the similar training course unless prompted by an organization. In the current security training method training is done once or twice a year. Once the training is done there is no continuity in the user's learning nor any revision over the course of time until the next session. Memory curve by the German psychologist Hermann Ebbinghaus 1985 shows that information is lost over time if there is no attempt to retain it. Continuity in learning is important especially in cybersecurity as it enables users to continue to follow the relevant information to acquire the knowledge with which they can be aware and ultimately, protect themselves from any kind of cyber threats. Timely revising the concepts helps users recall the details of the topic and gain more confidence to deal with cyberthreats situation if encountered in real world.

To overcome the challenges of the conventional approaches, embodiments herein provide a method and system for adaptive real time training for URL awareness. The present disclosure provides in-situ cybersecurity training for users which provides continuous feedback and dynamic content to train the users in URL components. In situ training allows employees to learn and apply their skills in their actual work environment, making it more practical and relevant. This tailors the details to their specific environment, and it helps them to retain all their new knowledge. In their actual familiar training environment, employees can be much more relaxed and comfortable, this allows them to focus more on learning and retaining. Being comfortable allows users to think which, in other artificial settings/platform, they may become conscious and feel the burden of performing well. This deeper engagement translates to a better learning experience. It also increases confidence in their new knowledge or skills as they can now apply the training to concrete, specific situations. Employees can learn exactly how to apply their new skills in their daily routine. The present disclosure provides URL awareness security training at very specific moments during an employee's workday so that they are intrigued by the training content. All the employee needs to do is go through his/her day-to-day business. Considering the limited attention span of the person sitting at their computer the present disclosure is designed to be very short, precise, and contextually relevant. Duration for each training content is designed to be no more than a predefined time, for example, 15 seconds. Training content appears in front of the employee with the strategically planned interactions between user and the URL. Every session activates and appears in front of an employee with the employee's periodic interactions with URL for example, when the employee is hovering over on short URL (Shortened URLs are used by attackers for malicious attacks) or when the employee is trying to click on high-risk URL. Once the training session ends employees can resume their work until the next periodic training session appears in front of the employee. This training can be implemented in many forms, such as a browser-based application, an Operating System (OS)-based application, or a combination of both.

Further, the present disclosure helps organizations to train their employees on URL awareness in real time (In-situ). In-situ is a Latin phrase that translates to "on site". In-situ training means, "locally" or "in place", where training takes place in an employee's daily work routine and engages them with interesting content. The method disclosed enables providing seamless training experience to employees with personal and relatable content which is crafted as per the user behavioral pattern. The employees are trained to identify the components of URL in an interactive way. This makes users aware of the URLs they are interacting with daily and with this new conceptual knowledge, they can distinguish between phishing and legitimate URLs. Artificial Intelligence (AI) generated feedback along with supporting examples are provided to each response to improve URL understanding of the employee.

The training of the present disclosure is designed to be user-centric and adaptive based on the performance of the user, that means it has an ability to adapt its necessary features according to the performance metrics achieved by the user. For example, during training if an employee is struggling to identify a certain component of the URL in questions asked, then the occurrence of that component is increased in the training. The method also takes the forgetting curve and spaced repetition into consideration which offers continuous learning for better knowledge retention. This means employees can retain the received conceptual knowledge with the help of periodic revision. During the training employees are provided with a dashboard of individual scores and organization-wise scores. The scoring system in the training generates a sense of competitiveness amongst the employees which again motivates them to perform better than their colleagues in conceptual knowledge.

Further, the present disclosure provides user-centric content: To achieve that a browser-based extension is installed into the user's machine. This extension gets activated upon installation and runs in the background of the browser. Over a period of 30 days or two weeks based on the organization requirement this extension tracks the user's browsing behavior without collecting any sensitive data like user history. Only statistical data such as number of URLs user clicked, number of URLs user hovers over a period of a month while performing a daily task etc. is monitored by the extension. After a period of one month (configurable), upon successfully monitoring the browsing behavior, an extension decides the frequency of the questions appearance. For e.g., If the user is hovering over an average of n = 100 URLs in a day, then the training questions will be asked upon every f = 10th of 'n' value i.e., 10 in this case. The extension also checks the category of URL.s user is interacting with and displays the training session. For example, if a user is trying to click on a malicious URL category, can also be a prompt for initiating training. The value of f is used to equally space out the training session without irritating the user. For example, the value of fmax=50 and fmin=10 is pre-determined for a small or large value of n.

During the training process, the extension asks the user to identify the components of the URLs they are interacting with e.g. components such as Protocol, Subdomain, Domain, Top level domain, path, query string and fragment. The question can be formed as. What is the domain of the hovered URL? and the user has to select one out of four given options. The questions of the quiz are displayed in the popup format at the center of the browser screen. The user interface of this quiz is presented in an intuitive and engaging format. Users will be asked to identify the components of the URL they are clicking or hovering over in situ. To mimic a real-life scenario initially user must answer within predefined standard time limit of 15 seconds. Once the user selects the answer out of four options displayed, feedback created using Generative AI is provided to the user. The feedback is designed to be question specific and also considers the response from the user, this helps to improve the user's understanding of that component and URL with the relevant examples.

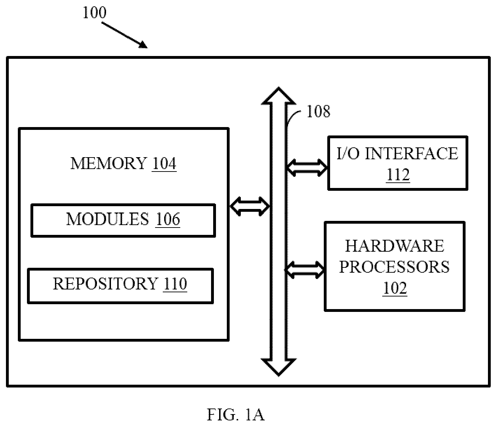

Referring now to the drawings, and more particularly to FIG. 1A through FIG. 5, where similar reference characters denote corresponding features consistently throughout the figures, there are shown preferred embodiments, and these embodiments are described in the context of the following exemplary system and/or method.

FIG. 1A is a functional block diagram of a system 100 for adaptive real time training for URL awareness, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

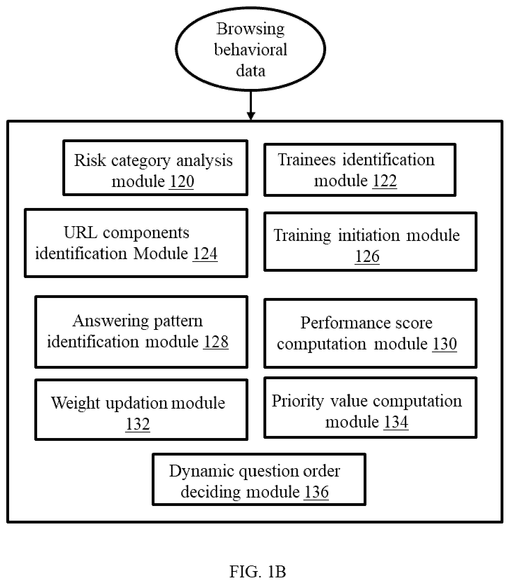

The plurality of modules 106 includes programs or coded instructions that supplement applications or functions performed by the system 100 for adaptive real time training for URL awareness. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for adaptive real time training for URL awareness. For example, the plurality of modules includes a risk category analysis module 120 (shown in FIG. 1B), a trainees identification module 122 (shown in FIG. 1B), a URL components identification module 124 (shown in FIG. 1B) and a training initiation module 126 (shown in FIG. 1B), an answering pattern identification module 128 (shown in FIG. 1B), a performance score computation module 130 (shown in FIG. 1B), a weight updation module 132 (shown in FIG. 1B), a priority value computation module 134 (shown in FIG. 1B) and a dynamic question order deciding module 136 (shown in FIG. 1B). A broad level functional architecture of the system 100 for adaptive real time training for URL awareness is depicted in FIG. 1B.

Further, the data repository (or repository) 110 of the system 100 may include a plurality of abstracted pieces of code for refinement and data that is processed, received, or generated as a result of the execution of the plurality of modules in the module(s) 106.

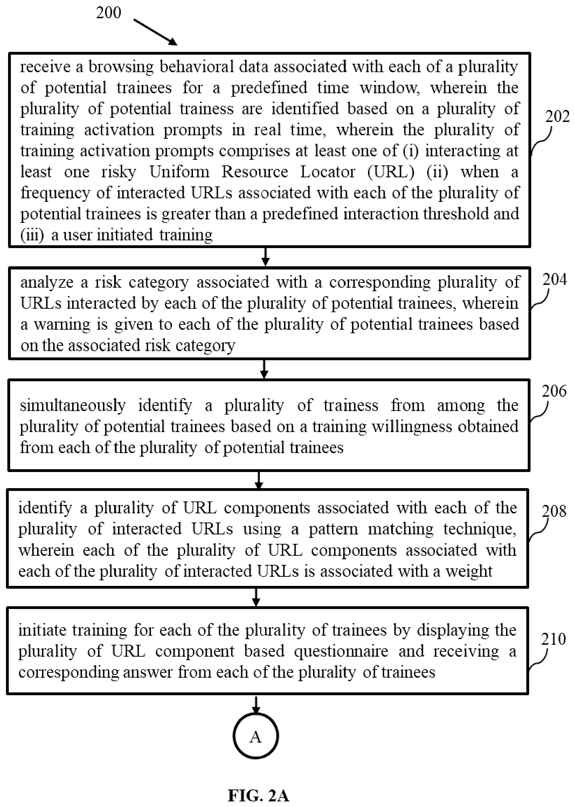

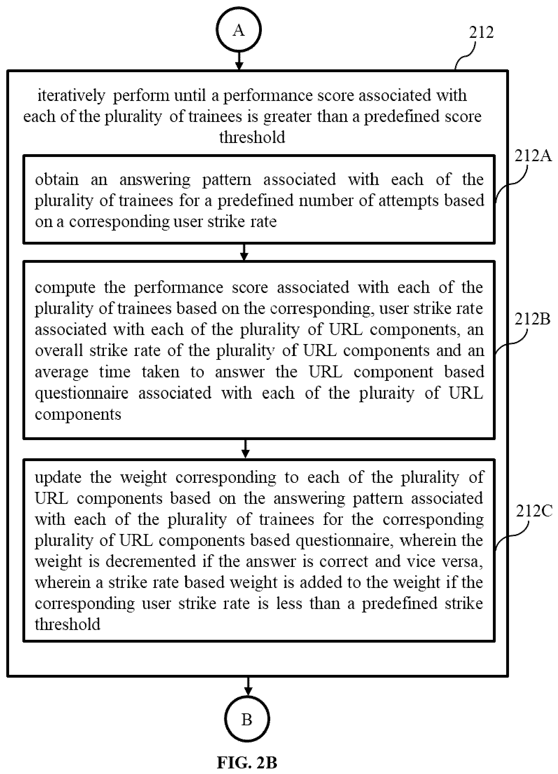

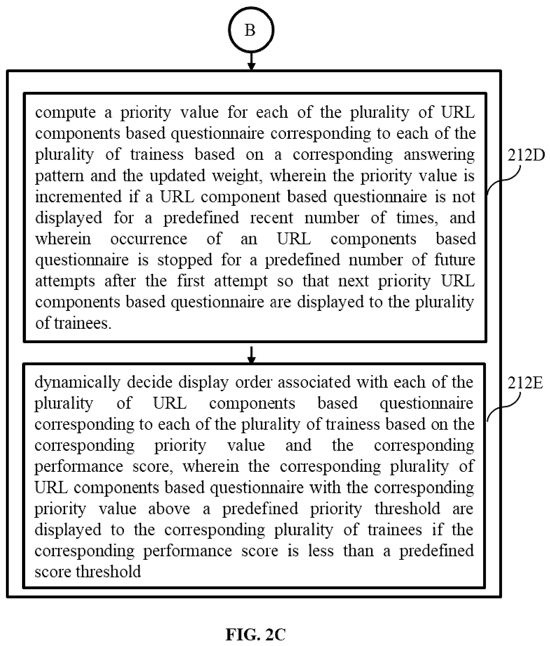

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). The working of the components of the system 100 are explained with reference to the method steps depicted in FIG. 2.

FIG. 2 is an exemplary flow diagrams illustrating a method 200 for adaptive real time training for URL awareness implemented by the system of FIG. 1A according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. Method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

At step 202 of method 200, one or more hardware processors 102 are configured by the programmed instructions to receive a browsing behavioral data associated with each of a plurality of potential trainees associated with an organization for a predefined time window. The plurality of potential trainees are identified based on a plurality of training activation prompt in real time, wherein the plurality of training activation prompts includes at least one of (i) interacting at least one risky Uniform Resource Locator (URL) (ii) when a frequency of interacted URLs associated with each of the plurality of potential trainees is greater than a predefined interaction threshold and (iii) a user initiated training. For example, the browsing behavioral data comprises an average number of URLs interacted in a particular period of time, categories of websites interacted, and an average number of URLs hovered over a period of time.

At step 204 of the method 200, the risk category analysis module 120, when executed by the one or more hardware processors 102, is configured by the programmed instructions to analyze a risk category associated with a corresponding plurality of URLs interacted by each of the plurality of potential trainees, wherein a warning is given to each of the plurality of potential trainees based on the associated risk category.

If the URL is not risky/malicious, it is checked whether Do Not Disturb (DND) is active. If the DND is active, no popup for training is generated and if the DND is not active, then risk associated with the URL is checked. For example, the risk associated with each of the plurality of risky URLs is one of a) a high risk b) a medium risk and c) a low risk based on a predefined risk threshold. The predefined risk threshold is decided based on the URL category, for example, banking, sports, education and the like. If a URL is a short URL, the corresponding short URL is expanded and displayed to the trainee and a warning is generated. If the trainee interacted with normal/non-risky URL, training popup is generated after the predefined interaction threshold. In an embodiment, warning and training popup is activated irrespective of the predefined interaction threshold 'f' if the user interacts with risky URL. Once the training popup is activated, then the count of 'f'^{th} hover starts from the point where popup activates. For example, considering the value of f=20, if the trainee interacts with the high risk URL on 3^{rd} URL interaction, then the popup is activated. Considering that, the next training popup is activated on the 23^{rd} interaction given that the trainee doesn't face any high, medium, low risky or short URL.

At step 206 of the method 200, the trainees identification module 122, when executed by the one or more hardware processors 102 are configured by the programmed instructions to simultaneously identify a plurality of trainees from among the plurality of potential trainees based on a training willingness obtained from each of the plurality of potential trainees.

At step 208 of the method 200, the URL components identification module 124, when executed by the one or more hardware processors 102, is configured by the programmed instructions to identify a plurality of URL components associated with each of the plurality of interacted URLs using a pattern matching technique, wherein each of the plurality of URL components associated with each of the plurality of interacted URLs is associated with a weight.

For example, URLs were dissected into the different components with the help of public suffix list from Mozilla^{™}. This list gave us the list of top-level domains which helped us identify the top-level domain of all URLs and then users were able to determine the domain and subdomain components of the URL.

At step 210 of the method 200, the training initiation module 126 when executed by the one or more hardware processors 102 is configured by the programmed instructions to initiate training for each of the plurality of trainees by displaying the plurality of URL component based questionnaire and receiving a corresponding answer from each of the plurality of trainees.

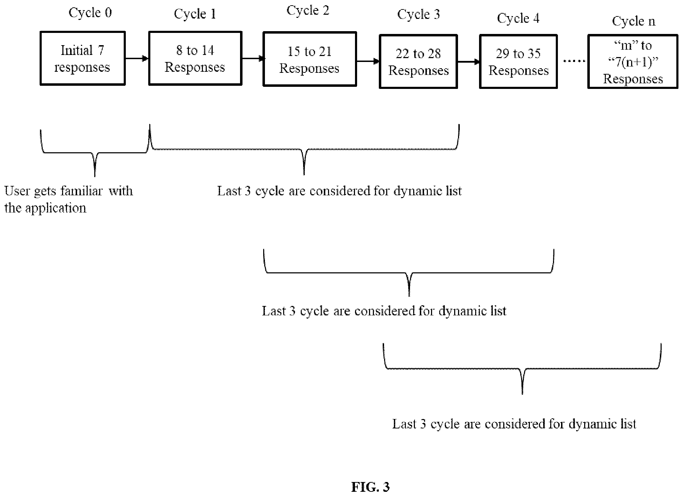

An example training approach is provided here. If a trainee is correctly answering the question about certain URL components, then the preference of occurrence of such questions is reduced, so that the users do not waste their time on the component they are already good at. (e.g., components such as protocol are easy to identify in the URL). Initially the extension will ask the 28 questions to the user in orderly manner. This gives 4 repetitions of 7 questions. In this process the 1st round of 7 questions will be ignored for the consideration of adaptive behavior as the user is getting familiar with the training concepts, interface and features. Once the user submits the last questions of 4th round i.e., question number 28, the system starts to create a dynamic list of the components based on the user's correct and wrong responses as shown in FIG. 3. Hereafter the list gets dynamically updated upon every response submission by the user. A technique (algorithm used to create the list makes sure that user faces more of those questions in which user is giving wrong answers while maintaining balance of rest of the questions as well. The technique uses the individual component strike rate to decide the preference of occurrence of the components. Initially the system works statically but once it gets enough responses from the user (for example, 28), it adapts itself in such a way that it caters to the user's needs. Always Recent 3 attempts for each component are considered for adaptive behavior. For example, strike rate is the number of correct answers given for every 100 questions asked.

Adaptive training of the present disclosure continues until the corresponding user/trainee has the highest performance metric for each component in the conceptual training. For example, the highest performance metric is user score more than 80% strike rate in last 6 attempts of each component. Once this is achieved the frequency of the training will be reduced for the user from daily to alternate day to weekly to once in two weeks to monthly, while monthly becomes the maximum threshold of the training. Once the highest performance metric is achieved and frequency starts to reduce, user will go through each one cycle of 7 questions one time. Once the one cycle is complete the training will shut down until the next duration. For example, if training is set to happen monthly then the user is expected to finish up the 7 questions within month using the value of 'f' (frequency) calculated from the recent data and once employee finishes the questions the training will appear directly on next month. This data also gets analyzed in the background and based on the user's strike rate the frequency of occurrence of components can vary from user to user. Continuity in training is required so that periodic revision is happening for the employee thus employee don.t forget previous learning when the new concepts are introduced. The process of re-visiting content that is previously done is important as it enables users to be more thorough in the subject matter. This is explained in conjunction with Steps 212A through 212E.

At step 212 of method 200, the steps 212A through 212E are executed repeatedly until the performance score associated with each of the plurality of trainees is greater than a predefined score threshold.

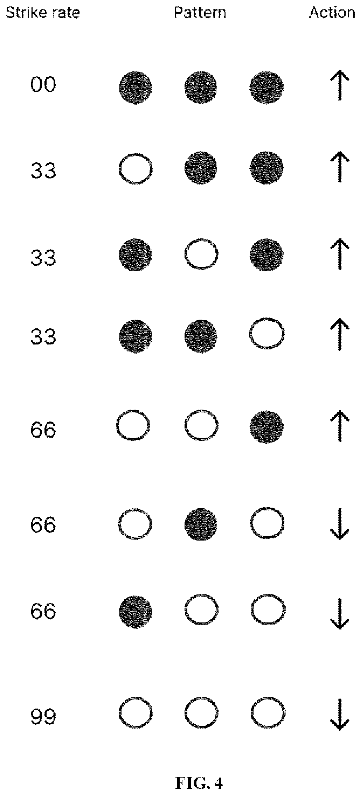

At step 212A of the method 200, the answering pattern identification module 128 when executed by the one or more hardware processors 102 are configured by the programmed instructions to obtain an answering pattern associated with each of the plurality of trainees for a predefined number of attempts based on a corresponding user strike rate. For example, some example answering patterns for 3 recent attempts are shown in FIG. 3. Now referring to FIG. 4, white circles indicate correct answers, and the dark circles indicate incorrect answers. Here, it is observed that the priority value of one answering pattern having 66% strike rate is increased (shown in action column with upward arrow) because the recent answer of the user is incorrect. So, in this case, the recent knowledge of the user is also considered as well to decide the priority value.

At step 212B of the method 200, the performance score computation module 130 when executed by the one or more hardware processors 102 are configured by the programmed instructions to compute the performance score associated with each of the plurality of trainees based on the corresponding, user strike rate associated with each of the plurality of URL components, an overall strike rate of the plurality of URL components and an average time taken to answer the URL component based questionnaire associated with each of the plurality of URL components.

In an embodiment, feedback is generated for each of the plurality of trainees based on a corresponding URL in popup and an answer, using Generative Artificial Intelligence (GenAI) model, wherein the feedback is used for updating training content.

At step 212C of the method 200, the weight updation module 132when executed by the one or more hardware processors 102 is configured by the programmed instructions to update the weight corresponding to each of the plurality of URL components based on the answering pattern associated with each of the plurality of trainees for the corresponding plurality of URL components based questionnaire, wherein the weight is decremented if the answer is correct and vice versa, wherein a strike rate based weight is added to the weight if the corresponding user strike rate is less than a predefined strike threshold.

At step 212D of the method 200, the priority value computation module 134 when executed by the one or more hardware processors 102 is configured by the programmed instructions to compute a priority value for each of the plurality of URL components based questionnaire corresponding to each of the plurality of trainees based on a corresponding answering pattern and the updated weight, wherein the priority value is incremented if a URL component based questionnaire is not displayed for a predefined recent number of times, and wherein occurrence of an URL components based questionnaire is stopped for a predefined number of future attempts after the first attempt so that next priority URL components based questionnaire are displayed to the plurality of trainees.

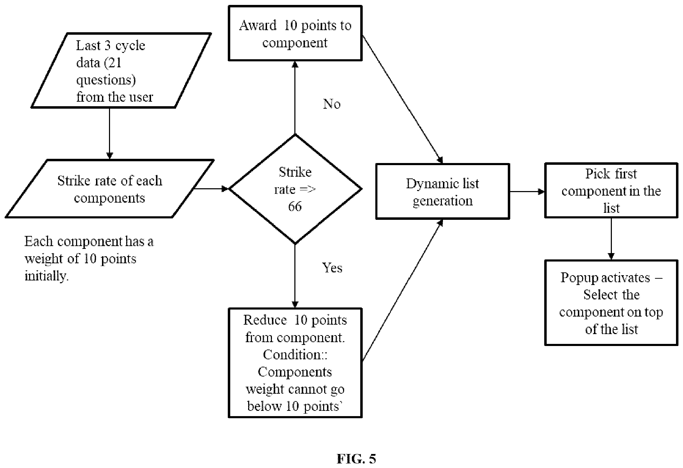

For example, FIG. 5 is a flow diagram illustrating awarding priority values to URL components and dynamic generation of list of questions for training. Here, the plurality of URL components based questionnaire associated with a higher priority URL component is selected and displayed for training.

In an embodiment, if two URL components based questionnaire is associated with a same priority value, one URL components based questionnaire is selected for display from among the two URL components based questionnaires based on the answering pattern, the overall strike rate of the two URL components based questionnaires and the average time taken for answering.

At step 212E of the method 200, the dynamic question order deciding module 136 when executed by the one or more hardware processors 102 is configured by the programmed instructions to dynamically decide display order associated with each of the plurality of URL components based questionnaire corresponding to each of the plurality of trainees based on the corresponding priority value and the corresponding performance score. The corresponding plurality of URL components based questionnaire with the corresponding priority value above a predefined priority threshold are displayed to the corresponding plurality of trainees if the corresponding performance score is less than a predefined score threshold.

Experimentation: The initial challenge was to decide the duration of the training content. To come up with the exact time duration of each training session internal experiments were conducted with a small number of users. In experimentation, each candidate was asked to answer the quiz on their pace without worrying about the time limit. In the background the time needed for each candidate to submit the response was calculated. The average time taken for a candidate to respond came out to be 13 seconds. Considering the above factor, it was decided to limit the training session to 15 seconds for a user to comfortably answer the questions. To determine the Initial frequency of the training content it is needed to understand the user browsing behavior and amount of time training content should appear in front of the user. With the help of real-time monitoring application, it could monitor the user behavior statistics such as average number of interactions user is making with the URLs in a day 'n'. Based on the value of 'f' where (f = 0.1 n), training content appears after 'f' number of interactions (hovers and clicks). For example, if a user is interacting with 200 URLs a day the training will appear after every 20th interaction. It was decided the maximum and minimum value of 'f' i.e., fmax = 50 and fmin = 10 to space out the training content equally and not to irritate the user with frequent training sessions respectively. This means if user is interacting less URLs in day for example 80 then the value of fmin will be used i.e., 10 as a frequency of training. Similarly, if the user is interacting with a lot of URLs in a day, for example 800, then the value of fmax will be used i.e., 50.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address the unresolved problem of adaptive real time training for URL awareness. The present disclosure computes priority value of each URL component based on updated weight of each URL component. The weight is updated based on answering pattern of the trainees. The dynamic training content is displayed based on performance of the user and the priority value of the plurality of URL components.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200), the method comprising:
receiving (202), by one or more hardware processors, a browsing behavioral data associated with each of a plurality of potential trainees for a predefined time window, wherein the plurality of potential trainees are identified based on a plurality of training activation prompt in real time, wherein the plurality of training activation prompt comprises at least one of (i) interacting at least one risky Uniform Resource Locator (URL) (ii) when a frequency of interacted URLs associated with each of the plurality of potential trainees is greater than a predefined interaction threshold and (iii) a user initiated training;
analyzing (204), by the one or more hardware processors, a risk category associated with each URL among a plurality of URLs interacted by each of the plurality of potential trainees, wherein a warning is given to each of the plurality of potential trainees based on the associated risk category;
simultaneously identifying (206), by the one or more hardware processors, a plurality of trainees from among the plurality of potential trainees based on a training willingness obtained from each of the plurality of potential trainees;
identifying (208), by the one or more hardware processors, a plurality of URL components associated with each of the plurality of interacted URLs using a pattern matching technique, wherein each of the plurality of URL components associated with each of the plurality of interacted URLs is associated with a weight;
initiating training (210), by the one or more hardware processors, for each of the plurality of trainees by displaying the plurality of URL component based questionnaire and receiving a corresponding answer from each of the plurality of trainees;
iteratively performing (212), by the one or more hardware processors, until a performance score associated with each of the plurality of trainees is greater than a predefined score threshold:
obtaining (212A), by the one or more hardware processors, an answering pattern associated with each of the plurality of trainees for a predefined number of attempts based on an associated user strike rate;
computing (212B), by the one or more hardware processors, the performance score associated with each of the plurality of trainees based on the corresponding user strike rate associated with each of the plurality of URL components, an overall strike rate of the plurality of URL components and an average time taken to answer the URL component based questionnaire associated with each of the plurality of URL components;
updating (212C), by the one or more hardware processors, the weight corresponding to each of the plurality of URL components based on the answering pattern associated with each of the plurality of trainees for the corresponding plurality of URL components based questionnaire, wherein the weight is decremented if the answer is correct and wherein the weight is incremented if the answer is incorrect, wherein a strike rate based weight is added to the weight if the corresponding user strike rate is less than a predefined strike threshold;
computing (212D), by the one or more hardware processors, a priority value for each of the plurality of URL components based questionnaire corresponding to each of the plurality of trainees based on a corresponding answering pattern and the updated weight, wherein the priority value is incremented if a URL component based questionnaire is not displayed for a predefined recent number of times, and wherein occurrence of an URL component based questionnaire is stopped for a predefined number of future attempts after the first attempt so that next priority URL components based questionnaire are displayed to the plurality of trainees; and
dynamically deciding (212E), by the one or more hardware processors, display order associated with each of the plurality of URL components based questionnaire corresponding to each of the plurality of trainees based on the corresponding priority value and the corresponding performance score, wherein the associated plurality of URL components based questionnaire with the priority value above a predefined priority threshold are displayed to the associated plurality of trainees if the associated performance score is less than a predefined score threshold.

2. The processor implemented method as claimed in claim 1, wherein the risk associated with each of the plurality of risky URLs is one of a) a high risk b) a medium risk and c) a low risk based on a predefined risk threshold.

3. The processor implemented method as claimed in claim 1, wherein the browsing behavioral data comprises an average number of URLs interacted in a particular period of time, categories of websites interacted, an average number of URLs hovered over a period of time, and average number of URLs clicked over a period of time.

4. The processor implemented method as claimed in claim 1, wherein if two URL components based questionnaire is associated with a same priority value, one URL components based questionnaire is selected for display from among the two URL components based questionnaires based on the answering pattern, the overall strike rate of the two URL components based questionnaires and the average time taken for answering.

5. The processor implemented method as claimed in claim 1, wherein a feedback is generated for each of the plurality of trainees based on a corresponding URL in popup and an answer, using Generative Artificial Intelligence (GenAI) model, wherein the feedback is used for updating training content.

6. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:
receive a browsing behavioral data associated with each of a plurality of potential trainees for a predefined time window, wherein the plurality of potential trainees are identified based on a plurality of training activation prompt in real time, wherein the plurality of training activation prompt comprises at least one of (i) interacting at least one risky Uniform Resource Locator (URL) (ii) when a frequency of interacted URLs associated with each of the plurality of potential trainees is greater than a predefined interaction threshold and (iii) a user initiated training;
analyze a risk category associated with each URL among a plurality of URLs interacted by each of the plurality of potential trainees, wherein a warning is given to each of the plurality of potential trainees based on the associated risk category;
simultaneously identify a plurality of trainees from among the plurality of potential trainees based on a training willingness obtained from each of the plurality of potential trainees;
identify a plurality of URL components associated with each of the plurality of interacted URLs using a pattern matching technique, wherein each of the plurality of URL components associated with each of the plurality of interacted URLs is associated with a weight;
initiate training for each of the plurality of trainees by displaying the plurality of URL component based questionnaire and receiving a corresponding answer from each of the plurality of trainees;
iteratively perform until a performance score associated with each of the plurality of trainees is greater than a predefined score threshold:
obtain an answering pattern associated with each of the plurality of trainees for a predefined number of attempts based on an associated user strike rate;
compute the performance score associated with each of the plurality of trainees based on the corresponding user strike rate associated with each of the plurality of URL components, an overall strike rate of the plurality of URL components and an average time taken to answer the URL component based questionnaire associated with each of the plurality of URL components;
update the weight corresponding to each of the plurality of URL components based on the answering pattern associated with each of the plurality of trainees for the corresponding plurality of URL components based questionnaire, wherein the weight is decremented if the answer is correct and wherein the weight is incremented if the answer is incorrect, wherein a strike rate based weight is added to the weight if the corresponding user strike rate is less than a predefined strike threshold;
compute a priority value for each of the plurality of URL components based questionnaire corresponding to each of the plurality of trainees based on a corresponding answering pattern and the updated weight, wherein the priority value is incremented if a URL component based questionnaire is not displayed for a predefined recent number of times, and wherein occurrence of an URL component based questionnaire is stopped for a predefined number of future attempts after the first attempt so that next priority URL components based questionnaire are displayed to the plurality of trainees; and
dynamically decide display order associated with each of the plurality of URL components based questionnaire corresponding to each of the plurality of trainees based on the corresponding priority value and the corresponding performance score, wherein the associated plurality of URL components based questionnaire with the priority value above a predefined priority threshold are displayed to the associated plurality of trainees if the associated performance score is less than a predefined score threshold.

7. The system of claim 6, wherein the risk associated with each of the plurality of risky URLs is one of a) a high risk b) a medium risk and c) a low risk based on a predefined risk threshold.

8. The system of claim 6, wherein the browsing behavioral data comprises an average number of URLs interacted in a particular period of time, categories of websites interacted, an average number of URLs hovered over a period of time, and average number of URLs clicked over a period of time.

9. The system of claim 6, wherein if two URL components based questionnaire is associated with a same priority value, one URL components based questionnaire is selected for display from among the two URL components based questionnaires based on the answering pattern, the overall strike rate of the two URL components based questionnaires and the average time taken for answering.

10. The system of claim 6, wherein a feedback is generated for each of the plurality of trainees based on a corresponding URL in popup and an answer, using Generative Artificial Intelligence (GenAI) model, wherein the feedback is used for updating training content.

11. One or more non-transitory machine-readable information storage mediums comprising one or more instructions which when executed by one or more hardware processors cause:
receiving, a browsing behavioral data associated with each of a plurality of potential trainees for a predefined time window, wherein the plurality of potential trainees are identified based on a plurality of training activation prompt in real time, wherein the plurality of training activation prompt comprises at least one of (i) interacting at least one risky Uniform Resource Locator (URL) (ii) when a frequency of interacted URLs associated with each of the plurality of potential trainees is greater than a predefined interaction threshold and (iii) a user initiated training;
analyzing, a risk category associated with each URL among a plurality of URLs interacted by each of the plurality of potential trainees, wherein a warning is given to each of the plurality of potential trainees based on the associated risk category;
simultaneously identifying, a plurality of trainees from among the plurality of potential trainees based on a training willingness obtained from each of the plurality of potential trainees;
identifying, a plurality of URL components associated with each of the plurality of interacted URLs using a pattern matching technique, wherein each of the plurality of URL components associated with each of the plurality of interacted URLs is associated with a weight;
initiating training, for each of the plurality of trainees by displaying the plurality of URL component based questionnaire and receiving a corresponding answer from each of the plurality of trainees;
iteratively performing, until a performance score associated with each of the plurality of trainees is greater than a predefined score threshold:
obtaining, an answering pattern associated with each of the plurality of trainees for a predefined number of attempts based on an associated user strike rate;
computing, the performance score associated with each of the plurality of trainees based on the corresponding user strike rate associated with each of the plurality of URL components, an overall strike rate of the plurality of URL components and an average time taken to answer the URL component based questionnaire associated with each of the plurality of URL components;
updating, the weight corresponding to each of the plurality of URL components based on the answering pattern associated with each of the plurality of trainees for the corresponding plurality of URL components based questionnaire, wherein the weight is decremented if the answer is correct and wherein the weight is incremented if the answer is incorrect, wherein a strike rate based weight is added to the weight if the corresponding user strike rate is less than a predefined strike threshold;
computing, a priority value for each of the plurality of URL components based questionnaire corresponding to each of the plurality of trainees based on a corresponding answering pattern and the updated weight, wherein the priority value is incremented if a URL component based questionnaire is not displayed for a predefined recent number of times, and wherein occurrence of an URL component based questionnaire is stopped for a predefined number of future attempts after the first attempt so that next priority URL components based questionnaire are displayed to the plurality of trainees; and
dynamically deciding, display order associated with each of the plurality of URL components based questionnaire corresponding to each of the plurality of trainees based on the corresponding priority value and the corresponding performance score, wherein the associated plurality of URL components based questionnaire with the priority value above a predefined priority threshold are displayed to the associated plurality of trainees if the associated performance score is less than a predefined score threshold.

12. The one or more non-transitory machine-readable information storage mediums of claim **11,** wherein the risk associated with each of the plurality of risky URLs is one of a) a high risk b) a medium risk and c) a low risk based on a predefined risk threshold.

13. The one or more non-transitory machine-readable information storage mediums of claim 11, wherein the browsing behavioral data comprises an average number of URLs interacted in a particular period of time, categories of websites interacted, an average number of URLs hovered over a period of time, and average number of URLs clicked over a period of time.

14. The one or more non-transitory machine-readable information storage mediums of claim11, wherein if two URL components based questionnaire is associated with a same priority value, one URL components based questionnaire is selected for display from among the two URL components based questionnaires based on the answering pattern, the overall strike rate of the two URL components based questionnaires and the average time taken for answering.

15. The one or more non-transitory machine-readable information storage mediums of claim 11, wherein a feedback is generated for each of the plurality of trainees based on a corresponding URL in popup and an answer, using Generative Artificial Intelligence (GenAI) model, wherein the feedback is used for updating training content.

## Patentansprüche

1. Prozessorimplementiertes Verfahren (200), wobei das Verfahren umfasst:
Empfangen (202), durch einen oder mehrere Hardwareprozessoren, von Browsing-Verhaltensdaten, die mit jedem einer Mehrzahl von potenziellen Auszubildenden für ein vordefiniertes Zeitfenster assoziiert sind, wobei die Mehrzahl von potenziellen Auszubildenden basierend auf einer Mehrzahl von Trainingsaktivierungsaufforderungen in Echtzeit identifiziert wird, wobei die Mehrzahl von Trainingsaktivierungsaufforderungen mindestens eines von (i) Interagieren mit mindestens einem riskanten Uniform Resource Locator (URL), (ii) wenn eine Häufigkeit von interagierten URLs, die mit jedem der Mehrzahl von potenziellen Auszubildenden assoziiert sind, größer als ein vordefinierter Interaktionsschwellenwert ist, und (iii) einem benutzerinitiierten Training umfasst;
Analysieren (204), durch den einen oder die mehreren Hardwareprozessoren, einer Risikokategorie, die mit jedem URL unter einer Mehrzahl von URLs assoziiert ist, die von jedem der Mehrzahl von potenziellen Auszubildenden interagiert werden, wobei jedem der Mehrzahl von potenziellen Auszubildenden basierend auf der assoziierten Risikokategorie eine Warnung gegeben wird;
gleichzeitiges Identifizieren (206), durch den einen oder die mehreren Hardwareprozessoren, einer Mehrzahl von Auszubildenden unter der Mehrzahl von potenziellen Auszubildenden basierend auf einer Trainingsbereitschaft, die von jedem der Mehrzahl von potenziellen Auszubildenden erhalten wird;
Identifizieren (208), durch den einen oder die mehreren Hardwareprozessoren, einer Mehrzahl von URL-Komponenten, die mit jedem der Mehrzahl von interagierten URLs assoziiert sind, unter Verwendung einer Musterabgleichtechnik, wobei jede der Mehrzahl von URL-Komponenten, die mit jedem der Mehrzahl von interagierten URLs assoziiert sind, mit einer Gewichtung assoziiert ist;
Initiieren von Training (210), durch den einen oder die mehreren Hardwareprozessoren, für jeden der Mehrzahl von Auszubildenden durch Anzeigen des auf der Mehrzahl von URL-Komponenten basierenden Fragebogens und Empfangen einer entsprechenden Antwort von jedem der Mehrzahl von Auszubildenden;
iteratives Durchführen (212), durch den einen oder die mehreren Hardwareprozessoren, bis eine Leistungsbewertung, die mit jedem der Mehrzahl von Auszubildenden assoziiert ist, größer als ein vordefinierter Bewertungsschwellenwert ist:
Erhalten (212A), durch den einen oder die mehreren Hardwareprozessoren, eines Antwortmusters, das mit jedem der Mehrzahl von Auszubildenden assoziiert ist, für eine vordefinierte Anzahl von Versuchen basierend auf einer assoziierten Benutzerangriffsrate;
Berechnen (212B), durch den einen oder die mehreren Hardwareprozessoren, der Leistungsbewertung, die mit jedem der Mehrzahl von Auszubildenden assoziiert ist, basierend auf der entsprechenden Benutzerangriffsrate, die mit jeder der Mehrzahl von URL-Komponenten assoziiert ist, einer Gesamtangriffsrate der Mehrzahl von URL-Komponenten und einer durchschnittlichen Zeit, die benötigt wird, um den auf der URL-Komponente basierenden Fragebogen zu beantworten, der mit jeder der Mehrzahl von URL-Komponenten assoziiert ist;
Aktualisieren (212C), durch den einen oder die mehreren Hardwareprozessoren, der Gewichtung, die jeder der Mehrzahl von URL-Komponenten entspricht, basierend auf dem Antwortmuster, das mit jedem der Mehrzahl von Auszubildenden assoziiert ist, für den entsprechenden auf der Mehrzahl von URL-Komponenten basierenden Fragebogen, wobei die Gewichtung dekrementiert wird, wenn die Antwort korrekt ist, und wobei die Gewichtung inkrementiert wird, wenn die Antwort inkorrekt ist, wobei eine auf der Angriffsrate basierende Gewichtung zu der Gewichtung hinzugefügt wird, wenn die entsprechende Benutzerangriffsrate kleiner als ein vordefinierter Angriffsschwellenwert ist;
Berechnen (212D), durch den einen oder die mehreren Hardwareprozessoren, eines Prioritätswerts für jeden der auf der Mehrzahl von URL-Komponenten basierenden Fragebogen, der jedem der Mehrzahl von Auszubildenden entspricht, basierend auf einem entsprechenden Antwortmuster und der aktualisierten Gewichtung, wobei der Prioritätswert inkrementiert wird, wenn ein auf der URL-Komponente basierender Fragebogen für eine vordefinierte kürzliche Anzahl von Malen nicht angezeigt wird, und wobei das Auftreten eines auf der URL-Komponente basierenden Fragebogens für eine vordefinierte Anzahl von zukünftigen Versuchen nach dem ersten Versuch gestoppt wird, sodass ein auf der URL-Komponente basierender Fragebogen nächster Priorität für die Mehrzahl von Auszubildenden angezeigt wird; und
dynamisches Entscheiden (212E), durch den einen oder die mehreren Hardwareprozessoren, einer Anzeigereihenfolge, die mit jedem der auf der Mehrzahl von URL-Komponenten basierenden Fragebogen assoziiert ist, der jedem der Mehrzahl von Auszubildenden entspricht, basierend auf dem entsprechenden Prioritätswert und der entsprechenden Leistungsbewertung, wobei der assoziierte auf der Mehrzahl von URL-Komponenten basierende Fragebogen mit dem Prioritätswert über einem vordefinierten Prioritätsschwellenwert für die assoziierte Mehrzahl von Auszubildenden angezeigt wird, wenn die assoziierte Leistungsbewertung kleiner als ein vordefinierter Bewertungsschwellenwert ist.

2. Prozessorimplementiertes Verfahren nach Anspruch 1, wobei das Risiko, das mit jeder der Mehrzahl von riskanten URLs assoziiert ist, eines von a) einem hohen Risiko, b) einem mittleren Risiko und c) einem niedrigen Risiko basierend auf einem vordefinierten Risikoschwellenwert ist.

3. Prozessorimplementiertes Verfahren nach Anspruch 1, wobei die Browsing-Verhaltensdaten eine durchschnittliche Anzahl von URLs, die in einem bestimmten Zeitraum interagiert haben, Kategorien von Webseiten, die interagiert haben, eine durchschnittliche Anzahl von URLs, die über einen Zeitraum schweben, und eine durchschnittliche Anzahl von URLs, die über einen Zeitraum angeklickt haben, umfassen.

4. Prozessorimplementiertes Verfahren nach Anspruch 1, wobei, wenn zwei auf URL-Komponenten basierende Fragebögen mit einem gleichen Prioritätswert assoziiert sind, ein auf URL-Komponenten basierender Fragebogen zur Anzeige aus den zwei auf URL-Komponenten basierenden Fragebögen basierend auf dem Antwortmuster, der Gesamtangriffsrate der zwei auf URL-Komponenten basierenden Fragebögen und der durchschnittlichen Zeit, die zum Beantworten benötigt wird, ausgewählt wird.

5. Prozessorimplementiertes Verfahren nach Anspruch 1, wobei eine Rückmeldung für jeden der Mehrzahl von Auszubildenden basierend auf einer entsprechenden URL in einem Popup und einer Antwort unter Verwendung von generativer künstlicher Intelligenz (GenAI) erzeugt wird, wobei die Rückmeldung zum Aktualisieren von Trainingsinhalten verwendet wird.

6. System (100), umfassend:
mindestens einen Speicher (104), der programmierte Anweisungen speichert; eine oder mehrere Eingabe/Ausgabe(E/A)-Schnittstellen (112); und einen oder mehrere Hardwareprozessoren (102), die betriebsfähig mit dem mindestens einen Speicher (104) gekoppelt sind, wobei der eine oder die mehreren Hardwareprozessoren (102) durch die programmierten Anweisungen konfiguriert sind zum:
Empfangen von Browsing-Verhaltensdaten, die mit jedem einer Mehrzahl von potenziellen Auszubildenden für ein vordefiniertes Zeitfenster assoziiert sind, wobei die Mehrzahl von potenziellen Auszubildenden basierend auf einer Mehrzahl von Trainingsaktivierungsaufforderungen in Echtzeit identifiziert wird, wobei die Mehrzahl von Trainingsaktivierungsaufforderungen mindestens eines von (i) Interagieren mit mindestens einem riskanten Uniform Resource Locator (URL), (ii) wenn eine Häufigkeit von interagierten URLs, die mit jedem der Mehrzahl von potenziellen Auszubildenden assoziiert sind, größer als ein vordefinierter Interaktionsschwellenwert ist, und (iii) einem benutzerinitiierten Training umfasst;
Analysieren einer Risikokategorie, die mit jedem URL unter einer Mehrzahl von URLs assoziiert ist, die von jedem der Mehrzahl von potenziellen Auszubildenden interagiert werden, wobei jedem der Mehrzahl von potenziellen Auszubildenden basierend auf der assoziierten Risikokategorie eine Warnung gegeben wird;
gleichzeitiges Identifizieren einer Mehrzahl von Auszubildenden unter der Mehrzahl von potenziellen Auszubildenden basierend auf einer Trainingsbereitschaft, die von jedem der Mehrzahl von potenziellen Auszubildenden erhalten wird;
Identifizieren einer Mehrzahl von URL-Komponenten, die mit jedem der Mehrzahl von interagierten URLs assoziiert sind, unter Verwendung einer Musterabgleichtechnik, wobei jede der Mehrzahl von URL-Komponenten, die mit jedem der Mehrzahl von interagierten URLs assoziiert sind, mit einer Gewichtung assoziiert ist;
Initiieren von Training für jeden der Mehrzahl von Auszubildenden durch Anzeigen des auf der Mehrzahl von URL-Komponenten basierenden Fragebogens und Empfangen einer entsprechenden Antwort von jedem der Mehrzahl von Auszubildenden;
iteratives Durchführen, bis eine Leistungsbewertung, die mit jedem der Mehrzahl von Auszubildenden assoziiert ist, größer als ein vordefinierter Bewertungsschwellenwert ist:
Erhalten eines Antwortmusters, das mit jedem der Mehrzahl von Auszubildenden assoziiert ist, für eine vordefinierte Anzahl von Versuchen basierend auf einer assoziierten Benutzerangriffsrate;
Berechnen der Leistungsbewertung, die mit jedem der Mehrzahl von Auszubildenden assoziiert ist, basierend auf der entsprechenden Benutzerangriffsrate, die mit jeder der Mehrzahl von URL-Komponenten assoziiert ist, einer Gesamtangriffsrate der Mehrzahl von URL-Komponenten und einer durchschnittlichen Zeit, die benötigt wird, um den auf der URL-Komponente basierenden Fragebogen zu beantworten, der mit jeder der Mehrzahl von URL-Komponenten assoziiert ist;
Aktualisieren der Gewichtung, die jeder der Mehrzahl von URL-Komponenten entspricht, basierend auf dem Antwortmuster, das mit jedem der Mehrzahl von Auszubildenden assoziiert ist, für den entsprechenden auf der Mehrzahl von URL-Komponenten basierenden Fragebogen, wobei die Gewichtung dekrementiert wird, wenn die Antwort korrekt ist, und wobei die Gewichtung inkrementiert wird, wenn die Antwort inkorrekt ist, wobei eine auf der Angriffsrate basierende Gewichtung zu der Gewichtung hinzugefügt wird, wenn die entsprechende Benutzerangriffsrate kleiner als ein vordefinierter Angriffsschwellenwert ist;
Berechnen eines Prioritätswerts für jeden der auf der Mehrzahl von URL-Komponenten basierenden Fragebogen, der jedem der Mehrzahl von Auszubildenden entspricht, basierend auf einem entsprechenden Antwortmuster und der aktualisierten Gewichtung, wobei der Prioritätswert inkrementiert wird, wenn ein auf der URL-Komponente basierender Fragebogen für eine vordefinierte kürzliche Anzahl von Malen nicht angezeigt wird, und wobei das Auftreten eines auf der URL-Komponente basierenden Fragebogens für eine vordefinierte Anzahl von zukünftigen Versuchen nach dem ersten Versuch gestoppt wird, sodass ein auf der URL-Komponente basierender Fragebogen nächster Priorität für die Mehrzahl von Auszubildenden angezeigt wird; und
dynamisches Entscheiden einer Anzeigereihenfolge, die mit jedem der auf der Mehrzahl von URL-Komponenten basierenden Fragebogen assoziiert ist, der jedem der Mehrzahl von Auszubildenden entspricht, basierend auf dem entsprechenden Prioritätswert und der entsprechenden Leistungsbewertung, wobei der assoziierte auf der Mehrzahl von URL-Komponenten basierende Fragebogen mit dem Prioritätswert über einem vordefinierten Prioritätsschwellenwert für die assoziierte Mehrzahl von Auszubildenden angezeigt wird, wenn die assoziierte Leistungsbewertung kleiner als ein vordefinierter Bewertungsschwellenwert ist.

7. System nach Anspruch 6, wobei das Risiko, das mit jeder der Mehrzahl von riskanten URLs assoziiert ist, eines von a) einem hohen Risiko, b) einem mittleren Risiko und c) einem niedrigen Risiko basierend auf einem vordefinierten Risikoschwellenwert ist.

8. System nach Anspruch 6, wobei die Browsing-Verhaltensdaten eine durchschnittliche Anzahl von URLs, die in einem bestimmten Zeitraum interagiert haben, Kategorien von Webseiten, die interagiert haben, eine durchschnittliche Anzahl von URLs, die über einen Zeitraum schweben, und eine durchschnittliche Anzahl von URLs, die über einen Zeitraum angeklickt haben, umfassen.

9. System nach Anspruch 6, wobei, wenn zwei auf URL-Komponenten basierende Fragebögen mit einem gleichen Prioritätswert assoziiert sind, ein auf URL-Komponenten basierender Fragebogen zur Anzeige aus den zwei auf URL-Komponenten basierenden Fragebögen basierend auf dem Antwortmuster, der Gesamtangriffsrate der zwei auf URL-Komponenten basierenden Fragebögen und der durchschnittlichen Zeit, die zum Beantworten benötigt wird, ausgewählt wird.

10. System nach Anspruch 6, wobei eine Rückmeldung für jeden der Mehrzahl von Auszubildenden basierend auf einer entsprechenden URL in einem Popup und einer Antwort unter Verwendung von generativer künstlicher Intelligenz (GenAI) erzeugt wird, wobei die Rückmeldung zum Aktualisieren von Trainingsinhalten verwendet wird.

11. Ein oder mehrere nichtflüchtige maschinenlesbare Informationsspeichermedien, die eine oder mehrere Anweisungen umfassen, die, wenn sie durch einen oder mehrere Hardwareprozessoren ausgeführt werden, bewirken:
Empfangen von Browsing-Verhaltensdaten, die mit jedem einer Mehrzahl von potenziellen Auszubildenden für ein vordefiniertes Zeitfenster assoziiert sind, wobei die Mehrzahl von potenziellen Auszubildenden basierend auf einer Mehrzahl von Trainingsaktivierungsaufforderungen in Echtzeit identifiziert wird, wobei die Mehrzahl von Trainingsaktivierungsaufforderungen mindestens eines von (i) Interagieren mit mindestens einem riskanten Uniform Resource Locator (URL), (ii) wenn eine Häufigkeit von interagierten URLs, die mit jedem der Mehrzahl von potenziellen Auszubildenden assoziiert sind, größer als ein vordefinierter Interaktionsschwellenwert ist, und (iii) einem benutzerinitiierten Training umfasst;
Analysieren einer Risikokategorie, die mit jedem URL unter einer Mehrzahl von URLs assoziiert ist, die von jedem der Mehrzahl von potenziellen Auszubildenden interagiert werden, wobei jedem der Mehrzahl von potenziellen Auszubildenden basierend auf der assoziierten Risikokategorie eine Warnung gegeben wird;
gleichzeitiges Identifizieren einer Mehrzahl von Auszubildenden unter der Mehrzahl von potenziellen Auszubildenden basierend auf einer Trainingsbereitschaft, die von jedem der Mehrzahl von potenziellen Auszubildenden erhalten wird;
Identifizieren einer Mehrzahl von URL-Komponenten, die mit jedem der Mehrzahl von interagierten URLs assoziiert sind, unter Verwendung einer Musterabgleichtechnik, wobei jede der Mehrzahl von URL-Komponenten, die mit jedem der Mehrzahl von interagierten URLs assoziiert sind, mit einer Gewichtung assoziiert ist;
Initiieren von Training, für jeden der Mehrzahl von Auszubildenden durch Anzeigen des auf der Mehrzahl von URL-Komponenten basierenden Fragebogens und Empfangen einer entsprechenden Antwort von jedem der Mehrzahl von Auszubildenden;
iteratives Durchführen, bis eine Leistungsbewertung, die mit jedem der Mehrzahl von Auszubildenden assoziiert ist, größer als ein vordefinierter Bewertungsschwellenwert ist:
Erhalten eines Antwortmusters, das mit jedem der Mehrzahl von Auszubildenden assoziiert ist, für eine vordefinierte Anzahl von Versuchen basierend auf einer assoziierten Benutzerangriffsrate;
Berechnen der Leistungsbewertung, die mit jedem der Mehrzahl von Auszubildenden assoziiert ist, basierend auf der entsprechenden Benutzerangriffsrate, die mit jeder der Mehrzahl von URL-Komponenten assoziiert ist, einer Gesamtangriffsrate der Mehrzahl von URL-Komponenten und einer durchschnittlichen Zeit, die benötigt wird, um den auf der URL-Komponente basierenden Fragebogen zu beantworten, der mit jeder der Mehrzahl von URL-Komponenten assoziiert ist;
Aktualisieren der Gewichtung, die jeder der Mehrzahl von URL-Komponenten entspricht, basierend auf dem Antwortmuster, das mit jedem der Mehrzahl von Auszubildenden assoziiert ist, für den entsprechenden auf der Mehrzahl von URL-Komponenten basierenden Fragebogen, wobei die Gewichtung dekrementiert wird, wenn die Antwort korrekt ist, und wobei die Gewichtung inkrementiert wird, wenn die Antwort inkorrekt ist, wobei eine auf der Angriffsrate basierende Gewichtung zu der Gewichtung hinzugefügt wird, wenn die entsprechende Benutzerangriffsrate kleiner als ein vordefinierter Angriffsschwellenwert ist;
Berechnen eines Prioritätswerts für jeden der auf der Mehrzahl von URL-Komponenten basierenden Fragebogen, der jedem der Mehrzahl von Auszubildenden entspricht, basierend auf einem entsprechenden Antwortmuster und der aktualisierten Gewichtung, wobei der Prioritätswert inkrementiert wird, wenn ein auf der URL-Komponente basierender Fragebogen für eine vordefinierte kürzliche Anzahl von Malen nicht angezeigt wird, und wobei das Auftreten eines auf der URL-Komponente basierenden Fragebogens für eine vordefinierte Anzahl von zukünftigen Versuchen nach dem ersten Versuch gestoppt wird, sodass ein auf der URL-Komponente basierender Fragebogen nächster Priorität für die Mehrzahl von Auszubildenden angezeigt wird; und
dynamisches Entscheiden einer Anzeigereihenfolge, die mit jedem der auf der Mehrzahl von URL-Komponenten basierenden Fragebogen assoziiert ist, der jedem der Mehrzahl von Auszubildenden entspricht, basierend auf dem entsprechenden Prioritätswert und der entsprechenden Leistungsbewertung, wobei der assoziierte auf der Mehrzahl von URL-Komponenten basierende Fragebogen mit dem Prioritätswert über einem vordefinierten Prioritätsschwellenwert für die assoziierte Mehrzahl von Auszubildenden angezeigt wird, wenn die assoziierte Leistungsbewertung kleiner als ein vordefinierter Bewertungsschwellenwert ist.

12. Ein oder mehrere nichtflüchtige maschinenlesbare Informationsspeichermedien nach Anspruch 11, wobei das Risiko, das mit jeder der Mehrzahl von riskanten URLs assoziiert ist, eines von a) einem hohen Risiko, b) einem mittleren Risiko und c) einem niedrigen Risiko basierend auf einem vordefinierten Risikoschwellenwert ist.

13. Ein oder mehrere nichtflüchtige maschinenlesbare Informationsspeichermedien nach Anspruch 11, wobei die Browsing-Verhaltensdaten eine durchschnittliche Anzahl von URLs, die in einem bestimmten Zeitraum interagiert haben, Kategorien von Webseiten, die interagiert haben, eine durchschnittliche Anzahl von URLs, die über einen Zeitraum schweben, und eine durchschnittliche Anzahl von URLs, die über einen Zeitraum angeklickt haben, umfassen.

14. Ein oder mehrere nichtflüchtige maschinenlesbare Informationsspeichermedien nach Anspruch 11, wobei, wenn zwei auf URL-Komponenten basierende Fragebögen mit einem gleichen Prioritätswert assoziiert sind, ein auf URL-Komponenten basierender Fragebogen zur Anzeige aus den zwei auf URL-Komponenten basierenden Fragebögen basierend auf dem Antwortmuster, der Gesamtangriffsrate der zwei auf URL-Komponenten basierenden Fragebögen und der durchschnittlichen Zeit, die zum Beantworten benötigt wird, ausgewählt wird.

15. Ein oder mehrere nichtflüchtige maschinenlesbare Informationsspeichermedien nach Anspruch 11, wobei eine Rückmeldung für jeden der Mehrzahl von Auszubildenden basierend auf einer entsprechenden URL in einem Popup und einer Antwort unter Verwendung von generativer künstlicher Intelligenz (GenAI) erzeugt wird, wobei die Rückmeldung zum Aktualisieren von Trainingsinhalten verwendet wird.

## Revendications

1. Procédé mis en œuvre par processeur (200), le procédé comprenant :
la réception (202), par un ou plusieurs processeurs matériels, de données comportementales de navigation associées à chacun d'une pluralité d'apprenants potentiels pendant une fenêtre temporelle prédéfinie, dans lequel la pluralité d'apprenants potentiels sont identifiés sur la base d'une pluralité d'invites d'activation d'apprentissage en temps réel, dans lequel la pluralité d'invites d'activation d'apprentissage comprend au moins l'un parmi (i) l'interaction avec au moins un localisateur uniforme de ressource (URL) à risque (ii) lorsqu'une fréquence d'URL consultés associés à chacun de la pluralité d'apprenants potentiels est supérieure à un seuil d'interaction prédéfini et (iii) un apprentissage initié par l'utilisateur ;
l'analyse (204), par les un ou plusieurs processeurs matériels, d'une catégorie de risque associée à chaque URL parmi une pluralité d'URL consultés avec chacun de la pluralité d'apprenants potentiels, dans lequel un avertissement est donné à chacun de la pluralité d'apprenants potentiels sur la base de la catégorie de risque associée ;
l'identification simultanée (206), par les un ou plusieurs processeurs matériels, d'une pluralité d'apprenants parmi la pluralité d'apprenants potentiels sur la base d'une volonté d'apprentissage obtenue à partir de chacun de la pluralité d'apprenants potentiels ;
l'identification (208), par les un ou plusieurs processeurs matériels, d'une pluralité de composants d'URL associés à chacun de la pluralité d'URL consultés à l'aide d'une technique de correspondance de motifs, dans lequel chacun de la pluralité de composants d'URL associés à chacun de la pluralité d'URL consultés est associé à un poids ;
l'initiation d'un apprentissage (210), par les un ou plusieurs processeurs matériels, pour chacun de la pluralité d'apprenants en affichant la pluralité de questionnaires basés sur des composants d'URL et en recevant une réponse correspondante à partir de chacun de la pluralité d'apprenants ;
la réalisation itérative (212), par les un ou plusieurs processeurs matériels, jusqu'à ce qu'un score de performance associé à chacun de la pluralité d'apprenants soit supérieur à un seuil de score prédéfini, des étapes menant à :
l'obtention (212A), par les un ou plusieurs processeurs matériels, d'un motif de réponse associé à chacun de la pluralité d'apprenants pour un nombre prédéfini de tentatives sur la base d'un taux de réussite d'utilisateur associé ;
le calcul (212B), par les un ou plusieurs processeurs matériels, du score de performance associé à chacun de la pluralité d'apprenants sur la base du taux de réussite d'utilisateur correspondant associé à chacun de la pluralité de composants d'URL, d'un taux de réussite global de la pluralité de composants d'URL et d'un temps moyen pris pour répondre au questionnaire basé sur des composants d'URL associé à chacun de la pluralité de composants d'URL ;
la mise à jour (212C), par les un ou plusieurs processeurs matériels, du poids correspondant à chacun de la pluralité de composants d'URL sur la base du motif de réponse associé à chacun de la pluralité d'apprenants pour la pluralité correspondante de questionnaires basés sur des composants d'URL, dans lequel le poids est décrémenté si la réponse est correcte et dans lequel le poids est incrémenté si la réponse est incorrecte, dans lequel un poids basé sur un taux de réussite est ajouté au poids si le taux de réussite d'utilisateur correspondant est inférieur à un seuil de réussite prédéfini ;
le calcul (212D), par les un ou plusieurs processeurs matériels, d'une valeur de priorité pour chacun de la pluralité de questionnaires basés sur des composants d'URL correspondant à chacun de la pluralité d'apprenants sur la base d'un motif de réponse correspondant et du poids mis à jour, dans lequel la valeur de priorité est incrémentée si un questionnaire basé sur des composants d'URL n'est pas affiché pour un nombre récent prédéfini de fois, et dans lequel l'apparition d'un questionnaire basé sur des composants d'URL est arrêtée pour un nombre prédéfini de tentatives futures après la première tentative de sorte que le questionnaire basé sur des composants d'URL de priorité suivante soit affiché pour la pluralité d'apprenants ; et
la décision dynamique (212E), par les un ou plusieurs processeurs matériels, d'un ordre d'affichage associé à chacun de la pluralité de questionnaires basés sur des composants d'URL correspondant à chacun de la pluralité d'apprenants sur la base de la valeur de priorité correspondante et du score de performance correspondant, dans lequel la pluralité associée de questionnaires basés sur des composants d'URL avec la valeur de priorité supérieure à un seuil de priorité prédéfini sont affichés pour la pluralité associée d'apprenants si le score de performance associé est inférieur à un seuil de score prédéfini.

2. Procédé mis en œuvre par processeur selon la revendication 1, dans lequel le risque associé à chacun de la pluralité d'URL à risque est l'un parmi a) un risque élevé, b) un risque moyen et c) un risque faible sur la base d'un seuil de risque prédéfini.

3. Procédé mis en œuvre par processeur selon la revendication 1, dans lequel les données comportementales de navigation comprennent un nombre moyen d'URL consultés dans une période de temps particulière, des catégories de sites Web consultés, un nombre moyen d'URL survolés sur une période de temps, et un nombre moyen d'URL cliqués sur une période de temps.

4. Procédé mis en œuvre par processeur selon la revendication 1, dans lequel si deux questionnaires basés sur des composants d'URL sont associés à une même valeur de priorité, un questionnaire basé sur des composants d'URL est sélectionné pour un affichage parmi les deux questionnaires basés sur des composants d'URL sur la base du motif de réponse, du taux de réussite global des deux questionnaires basés sur des composants d'URL et du temps moyen pris pour répondre.

5. Procédé mis en œuvre par processeur selon la revendication 1, dans lequel une rétroaction est générée pour chacun de la pluralité d'apprenants sur la base d'un URL correspondant dans une fenêtre contextuelle et d'une réponse, en utilisant un modèle d'intelligence artificielle générative (GenAI), dans lequel la rétroaction est utilisée pour mettre à jour un contenu d'apprentissage.

6. Système (100) comprenant :
au moins une mémoire (104) stockant des instructions programmées ; une ou plusieurs interfaces d'entrée/sortie (E/S) (112) ; et un ou plusieurs processeurs matériels (102) couplés de manière opérationnelle à l'au moins une mémoire (104), dans lequel les un ou plusieurs processeurs matériels (102) sont configurés par les instructions programmées pour :
recevoir des données comportementales de navigation associées à chacun d'une pluralité d'apprenants potentiels pendant une fenêtre temporelle prédéfinie, dans lequel la pluralité d'apprenants potentiels sont identifiés sur la base d'une pluralité d'invites d'activation d'apprentissage en temps réel, dans lequel la pluralité d'invites d'activation d'apprentissage comprend au moins l'un parmi (i) l'interaction avec au moins un localisateur uniforme de ressources (URL) à risque (ii) lorsqu'une fréquence d'URL consultés associés à chacun de la pluralité d'apprenants potentiels est supérieure à un seuil d'interaction prédéfini et (iii) un apprentissage initié par l'utilisateur ;
analyser une catégorie de risque associée à chaque URL parmi pluralité d'URL consultés avec chacun de la pluralité d'apprenants potentiels, dans lequel un avertissement est donné à chacun de la pluralité d'apprenants potentiels sur la base de la catégorie de risque associée ;
identifier simultanément une pluralité d'apprenants parmi la pluralité d'apprenants potentiels sur la base d'une volonté d'apprentissage obtenue à partir de chacun de la pluralité d'apprenants potentiels ;
identifier une pluralité de composants d'URL associés à chacun de la pluralité d'URL consultés à l'aide d'une technique de correspondance de motifs, dans lequel chacun de la pluralité de composants d'URL associés à chacun de la pluralité d'URL consultés est associé à un poids ;
initier un apprentissage pour chacun de la pluralité d'apprenants en affichant la pluralité de questionnaires basés sur des composants d'URL et en recevant une réponse correspondante à partir de chacun de la pluralité d'apprenants ;
réaliser itérativement jusqu'à ce qu'un score de performance associé à chacun de la pluralité d'apprenants soit supérieur à un seuil de score prédéfini, les étapes menant à :
obtenir un motif de réponse associé à chacun de la pluralité d'apprenants pour un nombre prédéfini de tentatives sur la base d'un taux de réussite d'utilisateur associé ;
calculer le score de performance associé à chacun de la pluralité d'apprenants sur la base du taux de réussite d'utilisateur correspondant associé à chacun de la pluralité de composants d'URL, d'un taux de réussite global de la pluralité de composants d'URL et d'un temps moyen pris pour répondre au questionnaire basé sur des composants d'URL associé à chacun de la pluralité de composants d'URL ;
mettre à jour le poids correspondant à chacun de la pluralité de composants d'URL sur la base du motif de réponse associé à chacun de la pluralité d'apprenants pour la pluralité correspondante de questionnaires basés sur des composants d'URL, dans lequel le poids est décrémenté si la réponse est correcte et dans lequel le poids est incrémenté si la réponse est incorrecte, dans lequel un poids basé sur un taux de réussite est ajouté au poids si le taux de réussite d'utilisateur correspondant est inférieur à un seuil de réussite prédéfini ;
calculer une valeur de priorité pour chacun de la pluralité de questionnaires basés sur des composants d'URL correspondant à chacun de la pluralité d'apprenants sur la base d'un motif de réponse correspondant et du poids mis à jour, dans lequel la valeur de priorité est incrémentée si un questionnaire basé sur des composants d'URL n'est pas affiché pour un nombre récent prédéfini de fois, et dans lequel l'apparition d'un questionnaire basé sur des composants d'URL est arrêtée pour un nombre prédéfini de tentatives futures après la première tentative de sorte que le questionnaire basé sur des composants d'URL de priorité suivante soit affiché pour la pluralité d'apprenants ; et
décider dynamiquement d'un ordre d'affichage associé à chacun de la pluralité de questionnaires basés sur des composants d'URL correspondant à chacun de la pluralité d'apprenants sur la base de la valeur de priorité correspondante et du score de performance correspondant, dans lequel la pluralité associée de questionnaires basés sur des composants d'URL avec la valeur de priorité supérieure à un seuil de priorité prédéfini sont affichés pour la pluralité associée d'apprenants si le score de performance associé est inférieur à un seuil de score prédéfini.

7. Système selon la revendication 6, dans lequel le risque associé à chacun de la pluralité d'URL à risque est l'un parmi a) un risque élevé, b) un risque moyen et c) un risque faible sur la base d'un seuil de risque prédéfini.

8. Système selon la revendication 6, dans lequel les données comportementales de navigation comprennent un nombre moyen d'URL consultés dans une période de temps particulière, des catégories de sites Web consultés, un nombre moyen d'URL survolés sur une période de temps, et un nombre moyen d'URL cliqués sur une période de temps.

9. Système selon la revendication 6, dans lequel si deux questionnaires basés sur des composants d'URL sont associés à une même valeur de priorité, un questionnaire basé sur des composants d'URL est sélectionné pour un affichage parmi les deux questionnaires basés sur des composants d'URL sur la base du motif de réponse, du taux de réussite global des deux questionnaires basés sur des composants d'URL et du temps moyen pris pour répondre.

10. Système selon la revendication 6, dans lequel une rétroaction est générée pour chacun de la pluralité d'apprenants sur la base d'un URL correspondant dans une fenêtre contextuelle et d'une réponse, en utilisant un modèle d'intelligence artificielle générative (GenAI), dans lequel la rétroaction est utilisée pour mettre à jour un contenu d'apprentissage.

11. Un ou plusieurs supports de stockage d'informations lisibles par machine non transitoires comprenant une ou plusieurs instructions qui, lorsqu'elles sont exécutées par un ou plusieurs processeurs matériels, amènent :
la réception, de données comportementales de navigation associées à chacun d'une pluralité d'apprenants potentiels pendant une fenêtre temporelle prédéfinie, dans lequel la pluralité d'apprenants potentiels sont identifiés sur la base d'une pluralité d'invites d'activation d'apprentissage en temps réel, dans lequel la pluralité d'invites d'activation d'apprentissage comprend au moins l'un parmi (i) l'interaction avec au moins un localisateur uniforme de ressources (URL) à risque (ii) lorsqu'une fréquence d'URL consultés associés à chacun de la pluralité d'apprenants potentiels est supérieure à un seuil d'interaction prédéfini et (iii) un apprentissage initié par l'utilisateur ;
l'analyse, d'une catégorie de risque associée à chaque URL parmi une pluralité d'URL consultés avec chacun de la pluralité d'apprenants potentiels, dans lequel un avertissement est donné à chacun de la pluralité d'apprenants potentiels sur la base de la catégorie de risque associée ;
l'identification simultanée, d'une pluralité d'apprenants parmi la pluralité d'apprenants potentiels sur la base d'une volonté d'apprentissage obtenue à partir de chacun de la pluralité d'apprenants potentiels ;
l'identification, d'une pluralité de composants d'URL associés à chacun de la pluralité d'URL consultés à l'aide d'une technique de correspondance de motifs, dans lequel chacun de la pluralité de composants d'URL associés à chacun de la pluralité d'URL consultés est associé à un poids ;
l'initiation d'un apprentissage, pour chacun de la pluralité d'apprenants en affichant la pluralité de questionnaires basés sur des composants d'URL et en recevant une réponse correspondante à partir de chacun de la pluralité d'apprenants ;
la réalisation itérative, jusqu'à ce qu'un score de performance associé à chacun de la pluralité d'apprenants soit supérieur à un seuil de score prédéfini :
de l'obtention, d'un motif de réponse associé à chacun de la pluralité d'apprenants pour un nombre prédéfini de tentatives sur la base d'un taux de réussite d'utilisateur associé ;
du calcul, du score de performance associé à chacun de la pluralité d'apprenants sur la base du taux de réussite d'utilisateur correspondant associé à chacun de la pluralité de composants d'URL, d'un taux de réussite global de la pluralité de composants d'URL et d'un temps moyen pris pour répondre au questionnaire basé sur des composants d'URL associé à chacun de la pluralité de composants d'URL ;
de la mise à jour, du poids correspondant à chacun de la pluralité de composants d'URL sur la base du motif de réponse associé à chacun de la pluralité d'apprenants pour la pluralité correspondante de questionnaires basés sur des composants d'URL, dans lequel le poids est décrémenté si la réponse est correcte et dans lequel le poids est incrémenté si la réponse est incorrecte, dans lequel un poids basé sur un taux de réussite est ajouté au poids si le taux de réussite d'utilisateur correspondant est inférieur à un seuil de réussite prédéfini ;
du calcul, d'une valeur de priorité pour chacun de la pluralité de questionnaires basés sur des composants d'URL correspondant à chacun de la pluralité d'apprenants sur la base d'un motif de réponse correspondant et du poids mis à jour, dans lequel la valeur de priorité est incrémentée si un questionnaire basé sur des composants d'URL n'est pas affiché pour un nombre récent prédéfini de fois, et dans lequel l'apparition d'un questionnaire basé sur des composants d'URL est arrêtée pour un nombre prédéfini de tentatives futures après la première tentative de sorte que le questionnaire basé sur des composants d'URL de priorité suivante soit affiché pour la pluralité d'apprenants ; et
la décision dynamique, d'un ordre d'affichage associé à chacun de la pluralité de questionnaires basés sur des composants d'URL correspondant à chacun de la pluralité d'apprenants sur la base de la valeur de priorité correspondante et du score de performance correspondant, dans lequel la pluralité associée de questionnaires basés sur des composants d'URL avec la valeur de priorité supérieure à un seuil de priorité prédéfini sont affichés pour la pluralité associée d'apprenants si le score de performance associé est inférieur à un seuil de score prédéfini.

12. Un ou plusieurs supports de stockage d'informations lisibles par machine non transitoires selon la revendication 11, dans lequel le risque associé à chacun de la pluralité d'URL à risque est l'un parmi a) un risque élevé, b) un risque moyen et c) un risque faible sur la base d'un seuil de risque prédéfini.

13. Un ou plusieurs supports de stockage d'informations lisibles par machine non transitoires selon la revendication 11, dans lequel les données comportementales de navigation comprennent un nombre moyen d'URL consultés dans une période de temps particulière, des catégories de sites Web consultés, un nombre moyen d'URL survolés sur une période de temps, et un nombre moyen d'URL cliqués sur une période de temps.

14. Un ou plusieurs supports de stockage d'informations lisibles par machine non transitoires selon la revendication 11, dans lequel si deux questionnaires basés sur des composants d'URL sont associés à une même valeur de priorité, un questionnaire basé sur des composants d'URL est sélectionné pour un affichage parmi les deux questionnaires basés sur des composants d'URL sur la base du motif de réponse, du taux de réussite global des deux questionnaires basés sur des composants d'URL et du temps moyen pris pour répondre.

15. Un ou plusieurs supports de stockage d'informations lisibles par machine non transitoires selon la revendication 11, dans lequel une rétroaction est générée pour chacun de la pluralité d'apprenants sur la base d'un URL correspondant dans une fenêtre contextuelle et d'une réponse, en utilisant un modèle d'intelligence artificielle générative (GenAI), dans lequel la rétroaction est utilisée pour mettre à jour un contenu d'apprentissage.
